# EUROPEAN PATENT APPLICATION

(11) **EP 4 318 407 A1**
(43) Date of publication of application: **07.02.2024**
(21) Application number: 22774856.3
(22) Date of filing: 22.02.2022
(51) Int. Cl.: G06T 19/00, G06T 7/00

(54) **INFORMATION PROCESSING DEVICE, INFORMATION PROCESSING METHOD, AND PROGRAM**

(30) Priority: 22.03.2021 JP 2021047724; 31.08.2021 JP 2021141462
(71) Applicant: Sony Group Corporation, Tokyo 108-0075 (JP)
(72) Inventor: YAMANAKA Daiki, Tokyo 108-0075 (JP); SENO Takashi, Tokyo 108-0075 (JP); KAWASHIMA Manabu, Tokyo 108-0075 (JP)
(74) Representative: MFG Patentanwälte Meyer-Wildhagen Meggle-Freund Gerhard PartG mbB
(86) International application number: PCT/JP2022/007178
(87) International publication number: WO 2022/202056

(57) **Abstract**

[Object]

The present disclosure provides an apparatus and resources for automatically recognizing an allowed region in order to eliminate time and effort required every time the allowed region is to be designated.

[Solving Means]

An information processing apparatus according to one aspect of the present disclosure includes a sorting section, a region identifying section, and an allowed region determining section. The sorting section sorts multiple planes included in space information representing an object existing in a three-dimensional space by use of the multiple planes, into at least a plane corresponding to a base and a plane corresponding to an obstacle. The region identifying section calculates a base region pertaining to the plane corresponding to the base and an obstacle region pertaining to the plane corresponding to the obstacle. The allowed region determining section calculates, on the basis of the base region and the obstacle region, an allowed region in which a target object existing in the three-dimensional space is allowed to be positioned.

## Description

### [Technical Field]

The present disclosure relates to an information processing apparatus, an information processing method, and a program.

### [Background Art]

Recent years have seen the appearance of numerous devices that perform processing according to the movement of a user. For example, there are games that allow a character to move on a display screen in synchronization with the user's movement. In such a game where the user continuously carries out operations, the user may be too immersed in the operations to realize the surrounding environment and may end up colliding with a surrounding object. In particular, in a case where the user enjoys VR (Virtual Reality) content wearing a head-mounted display (HMD) to play, there is a high danger that the user will collide with a real object because of the user's presumed blindness to the surroundings.

### [Citation List]

### [Patent Literature]

[PTL 1]
   Japanese Patent Laid-open No. 2018-190432
[PTL 2]
   Japanese Patent Laid-open No. 2017-119032
[PTL 3]
   Japanese Patent Laid-open No. 2020-115353

### [Non Patent Literature]

Denis Tome, et al. "xR-EgoPose: Egocentric 3D Human Pose from an HMD Camera," International Conference on Computer Vision (ICCV), 2019

### [Summary]

### [Technical Problem]

In order to ensure the user's physical safety, it is necessary to identify a safe area (region) where the user will not come into contact with real objects, and to keep the user staying therein. At present, however, the user' time and effort are needed to determine the safe area. For example, the user may put a controller on the floor and, using the controller, draw boundary lines of an area considered to be safe on the floor, thereby designating the safe area. Such a method involves requiring the user to put time and effort into designating the boundary lines every time the user plays the game. To avoid the hassle, the user may mindlessly resort to the previous settings. However, in cases in which obstacles such as pieces of furniture have been moved or added, using the immediately preceding settings may lead to the problem of inadvertent collision with obstacles.

The present disclosure provides an apparatus and resources for automatically recognizing an area in order to eliminate the time and effort required of the user to designate that area.

### [Solution to Problem]

An information processing apparatus according to one aspect of the present disclosure includes a sorting section, a region identifying section, and an allowed region determining section. The sorting section sorts multiple planes included in space information representing an object existing in a three-dimensional space by use of the multiple planes, into at least a plane corresponding to a base and a plane corresponding to an obstacle. The region identifying section calculates a base region pertaining to the plane corresponding to the base and an obstacle region pertaining to the plane corresponding to the obstacle. The allowed region determining section calculates, on the basis of the base region and the obstacle region, an allowed region in which a target object existing in the three-dimensional space is allowed to be positioned.

The above information processing apparatus automatically determines the allowed region, thereby eliminating the time and effort required of the user to designate the allowed region.

In an alternative configuration, the sorting section may calculate an angle between a normal line to each of the multiple planes and a direction of gravity, select from the multiple planes planes considered to be horizontal planes, on the basis of the angles, and select the base from the planes considered to be horizontal.

In another alternative configuration, the sorting section may calculate heights of the planes considered to be horizontal in the three-dimensional space, sort the planes considered to be horizontal into multiple groups on the basis of the calculated heights, and select as the base the planes belonging to a group having the largest number of the planes in the multiple groups.

In another alternative configuration, the sorting section may calculate heights of the multiple planes in the three-dimensional space and, on the basis of the calculated heights, sort the multiple planes other than those corresponding to the base into a plane corresponding to the obstacle and a plane not corresponding to the obstacle.

In another alternative configuration, the information processing apparatus may further include an output section configured to output an image indicating the allowed region.

In another alternative configuration, the information processing apparatus may further include an output section configured to output either an image or sound giving a warning in a case in which a distance between the target object and a boundary of the allowed region is equal to or less than a predetermined value.

In another alternative configuration, the information processing apparatus may further include an output section configured to output an instruction as to a movement of the target object and adjust the instruction to keep the movement of the target object within the allowed region.

In another alternative configuration, the information processing apparatus may further include a space information generating section configured to generate the space information.

In another alternative configuration, the space information generating section may generate the space information from distance measurement information indicative of a distance from a surrounding object acquired by a distance measuring device attached to the target object.

In another alternative configuration, the space information generating section may generate the space information from the distance measurement information measured by the distance measuring device and, on the basis of a position of the target object, remove information corresponding to the target object from either the distance measurement information or the space information.

In another alternative configuration, the information processing apparatus may further include a distance measuring section configured to generate distance measurement information by measuring a distance to a subject, a space information generating section configured to generate the space information from the distance measurement information, a gravity direction acquiring section configured to acquire the direction of gravity, and an output section configured to output information regarding the allowed region.

In another alternative configuration, the information processing apparatus may further include an unknown region determining section configured to determine an unknown region based on an occupancy grid map. The occupancy grid map may represent the three-dimensional space by using multiple three-dimensional unit cells. At least one of the multiple unit cells may possess unknown information indicating that it is unknown whether or not the unit cell is occupied by an object. The unknown region determining section may determine the unknown region based on a position of the three-dimensional unit cell possessing the unknown information. The allowed region determining section may prevent the unknown region from being included in the allowed region.

In another alternative configuration, the unknown region determining section may include into the unknown region a location in which at least a predetermined number of the three-dimensional unit cells possessing the unknown information are stacked in a vertical direction.

In another alternative configuration, the unknown region determining section may not include into the unknown region a location in which at least a predetermined number of the three-dimensional unit cells possessing the unknown information are stacked in the vertical direction but in which at least a predetermined number of the three-dimensional unit cells possessing non-occupancy information indicating that the unit cell is not occupied by any object are also stacked.

In another alternative configuration, the information processing apparatus may further include a hollow region identifying section configured to identify a hollow region based on an occupancy grid map. The occupancy grid map may represent the three-dimensional space by using multiple three-dimensional unit cells. At least one of the multiple unit cells may possess non-occupancy information indicating that the unit cell is not occupied by any object. The hollow region identifying section may determine a hollow region based on a position of the three-dimensional unit cell possessing the non-occupancy information. The allowed region determining section may not include the hollow region into the allowed region.

In another alternative configuration, the hollow region identifying section may include into the hollow region a location of a three-dimensional unit cell that possesses the non-occupancy information and is positioned lower than the plane corresponding to the base.

In another alternative configuration, the information processing apparatus may further include a surrounding region determining section configured to calculate as a surrounding region a region that constitutes a portion of the base region and includes a position of the target object, on the basis of at least the position of the target object. The allowed region determining section may calculate the allowed region further on the basis of the surrounding region.

In another alternative configuration, the surrounding region determining section may adjust either a shape or a size of the surrounding region on the basis of a direction of imaging by a camera and the direction of gravity.

In another alternative configuration, the surrounding region determining section may recognize a general size of the target object on the basis of attribute information regarding the target object and adjust either the shape or the size of the surrounding region according to the general size of the target object.

In another alternative configuration, the surrounding region determining section may adjust either the shape or the size of the surrounding region according to a posture of the target object.

According to another aspect of the present disclosure, there is provided an information processing method including a step of sorting multiple planes included in space information representing an object existing in a three-dimensional space by use of the multiple planes, into at least a plane corresponding to a base and a plane corresponding to an obstacle, a step of calculating a base region pertaining to the plane corresponding to the base and an obstacle region pertaining to the plane corresponding to the obstacle, and a step of calculating, on the basis of the base region and the obstacle region, an allowed region in which a target object existing in the three-dimensional space is allowed to be positioned.

According to a further aspect of the present disclosure, there is provided a program for execution by a computer, the program including a step of sorting multiple planes included in space information representing an object existing in a three-dimensional space by use of the multiple planes, into at least a plane corresponding to a base and a plane corresponding to an obstacle, a step of calculating a base region pertaining to the plane corresponding to the base and an obstacle region pertaining to the plane corresponding to the obstacle, and a step of calculating, on the basis of the base region and the obstacle region, an allowed region in which a target object existing in the three-dimensional space is allowed to be positioned.

### [Brief Description of Drawings]

[FIG. 1]

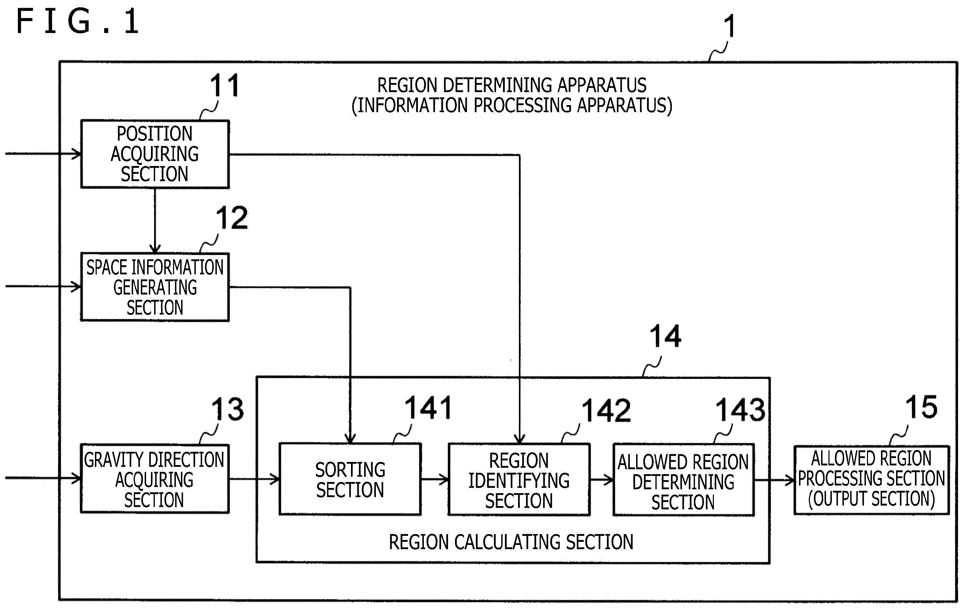

   FIG. 1 is a diagram depicting an exemplary configuration of a region determining apparatus according to a first embodiment.
[FIG. 2]

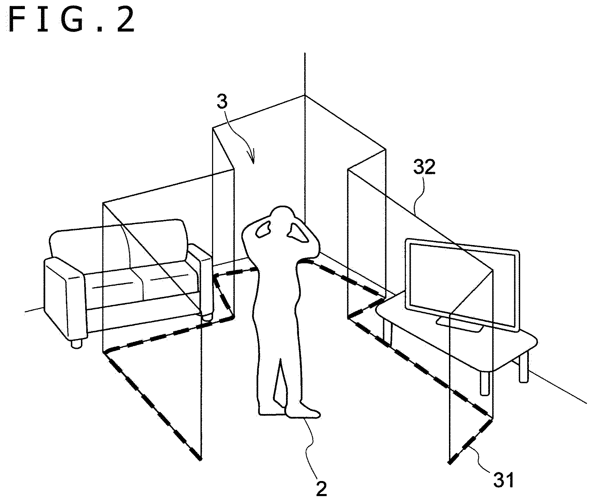

   FIG. 2 is a diagram depicting an exemplary allowed region.
[FIG. 3]

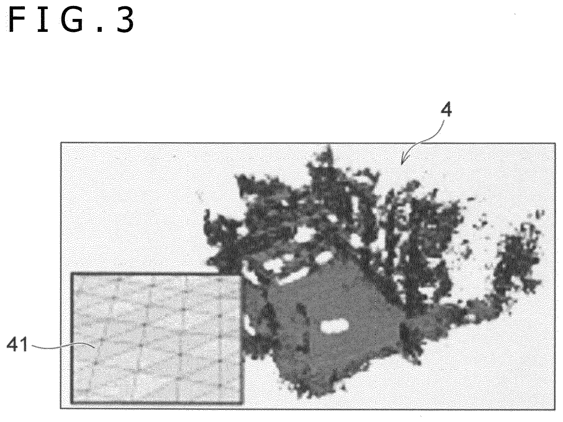

   FIG. 3 is a diagram depicting exemplary space information.
[FIG. 4]

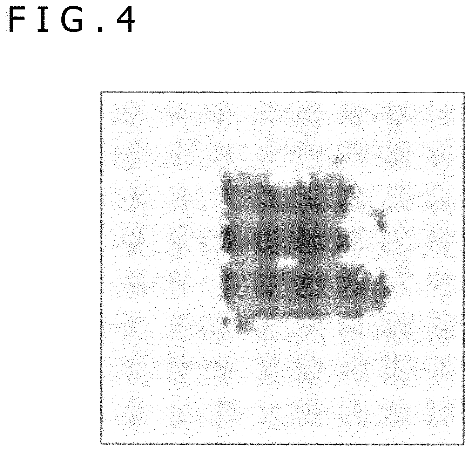

   FIG. 4 is a diagram depicting an exemplary base region.
[FIG. 5]

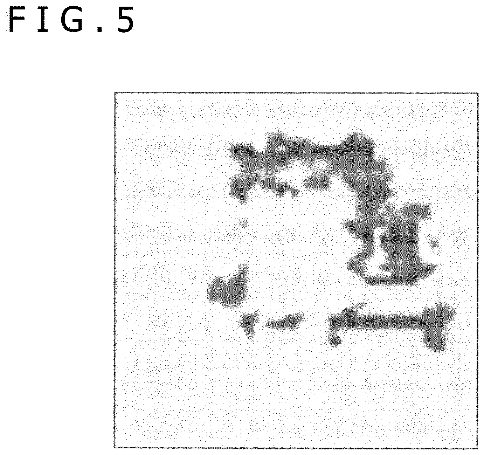

   FIG. 5 is a diagram depicting an exemplary obstacle region.
[FIG. 6]

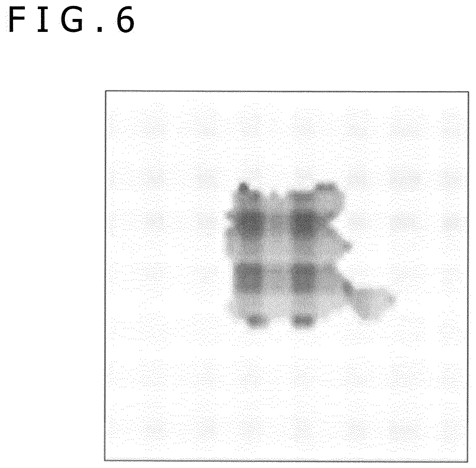

   FIG. 6 is a diagram depicting an exemplary allowed region.
[FIG. 7]

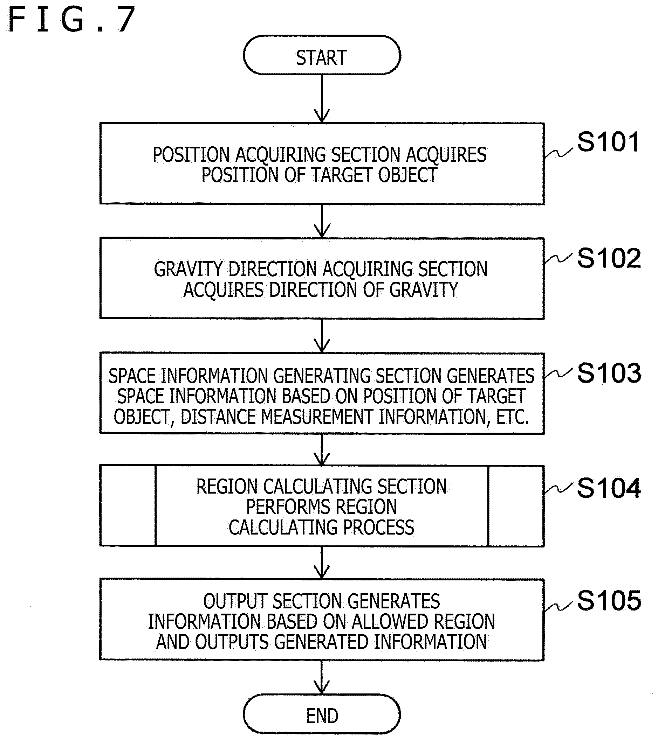

   FIG. 7 is a schematic flowchart of overall processing performed by the region determining apparatus according to the first embodiment.
[FIG. 8]

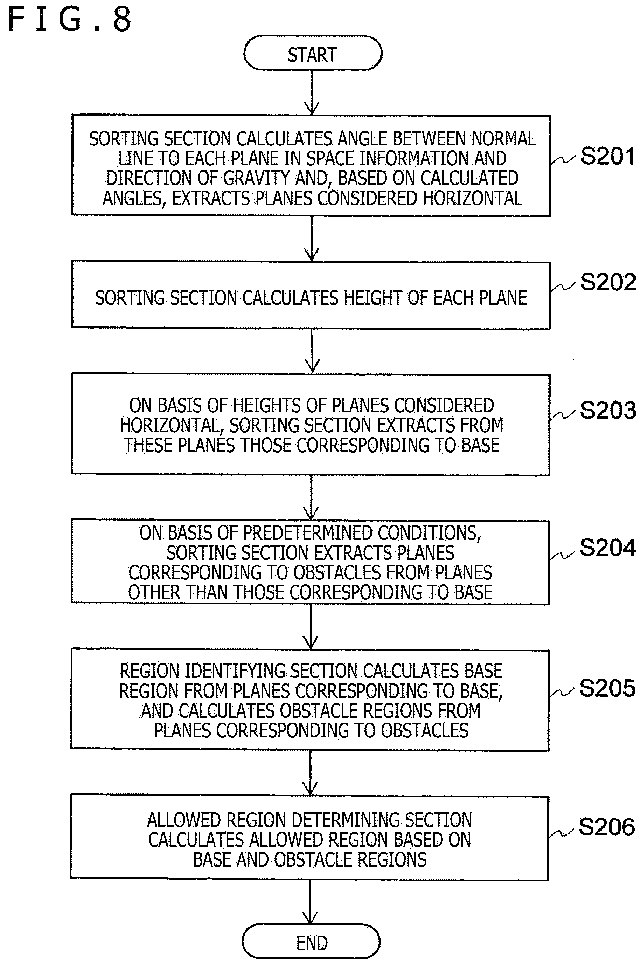

   FIG. 8 is a schematic flowchart of a region calculating process according to the first embodiment.
[FIG. 9]

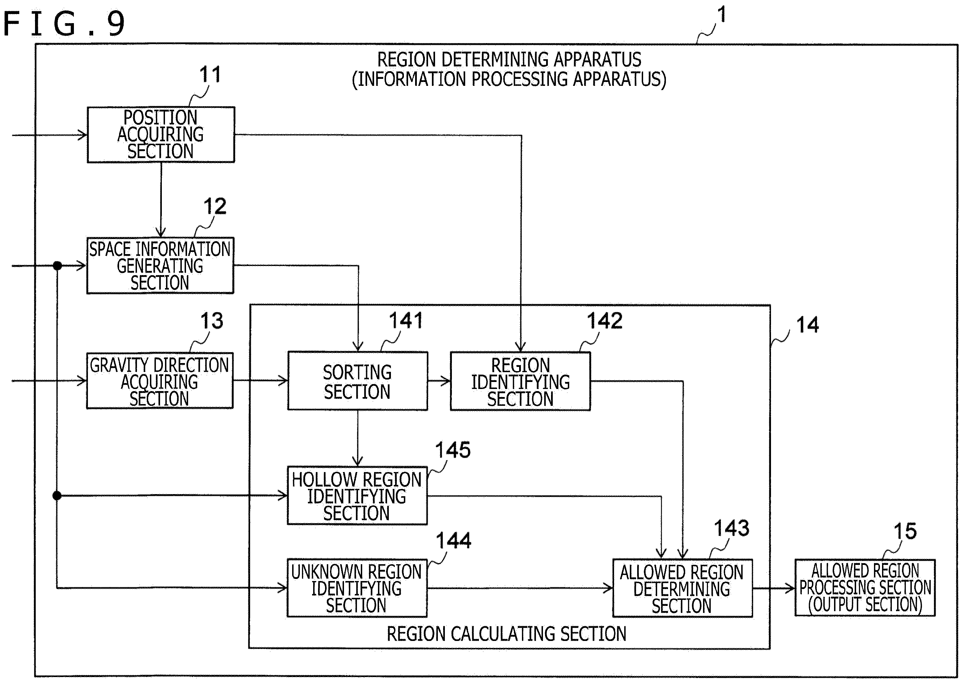

   FIG. 9 is a diagram depicting an exemplary configuration of a region determining apparatus according to a second embodiment.
[FIG. 10]

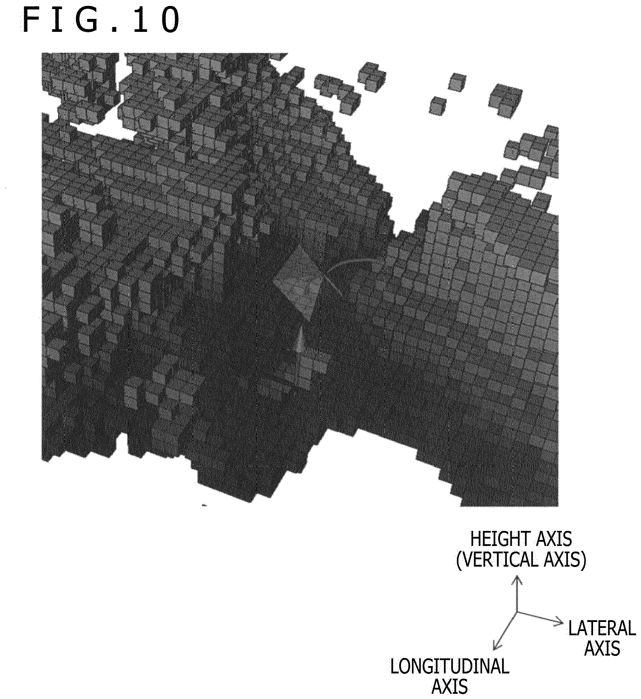

   FIG. 10 is a diagram depicting an exemplary occupancy grid map.
[FIG. 11]

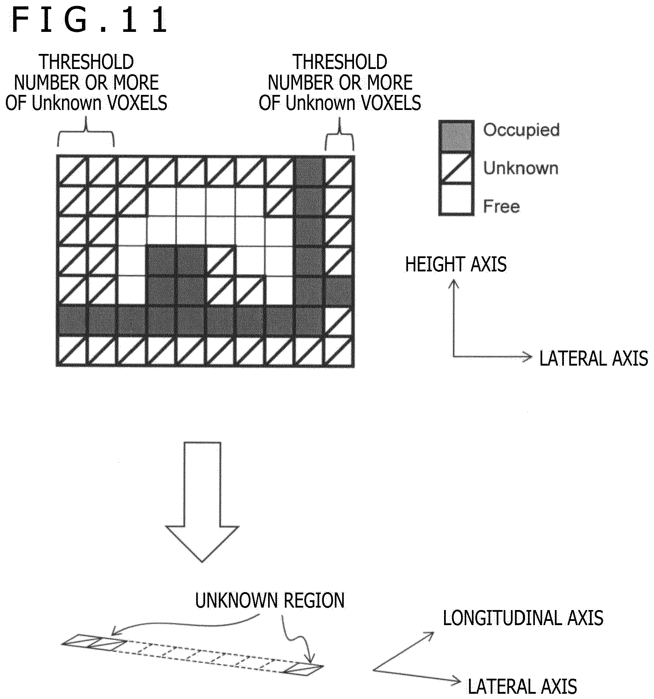

   FIG. 11 is a diagram explaining how to calculate unknown regions.
[FIG. 12]

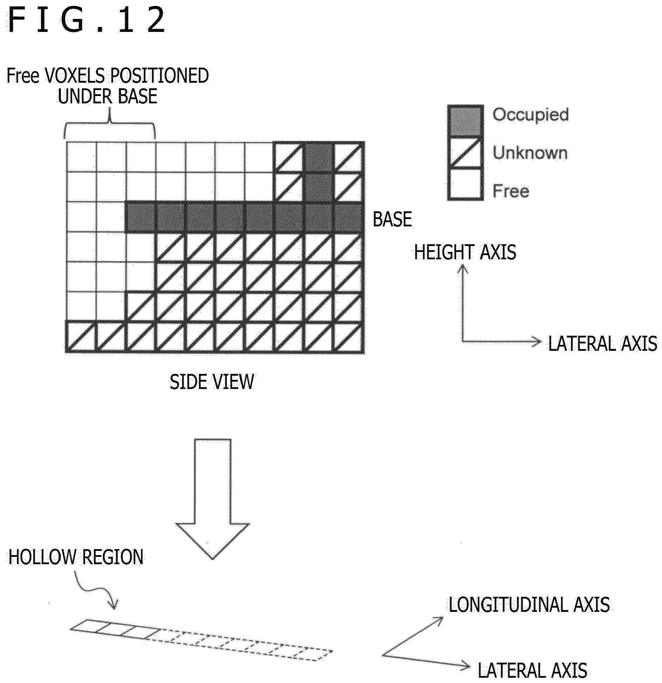

   FIG. 12 is a diagram explaining how to calculate hollow regions.
[FIG. 13]

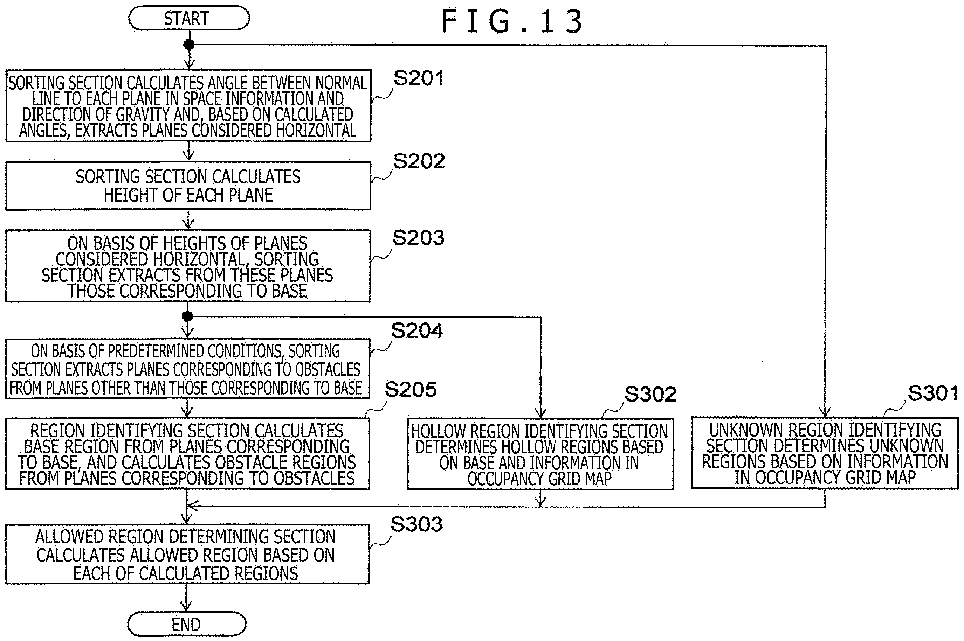

   FIG. 13 is a schematic flowchart of a region calculating process according to the second embodiment.
[FIG. 14]

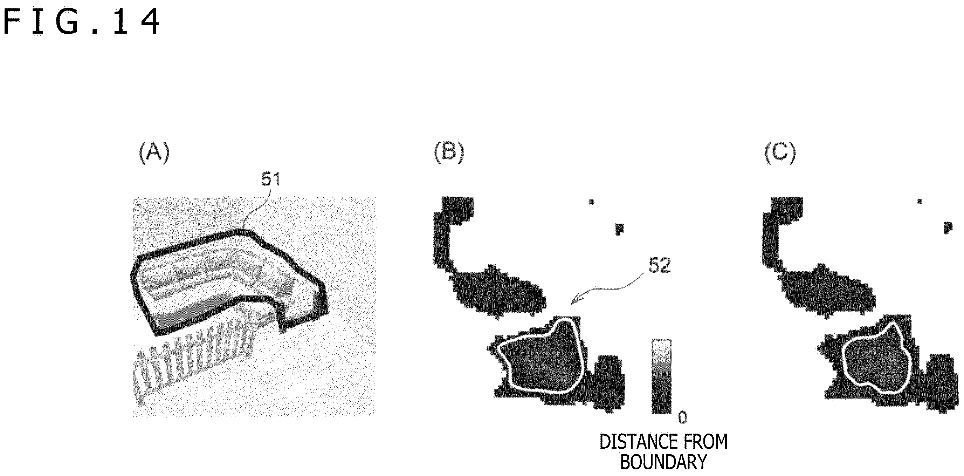

   FIG. 14 includes views explaining how to reduce an allowed region based on hollow regions.
[FIG. 15]

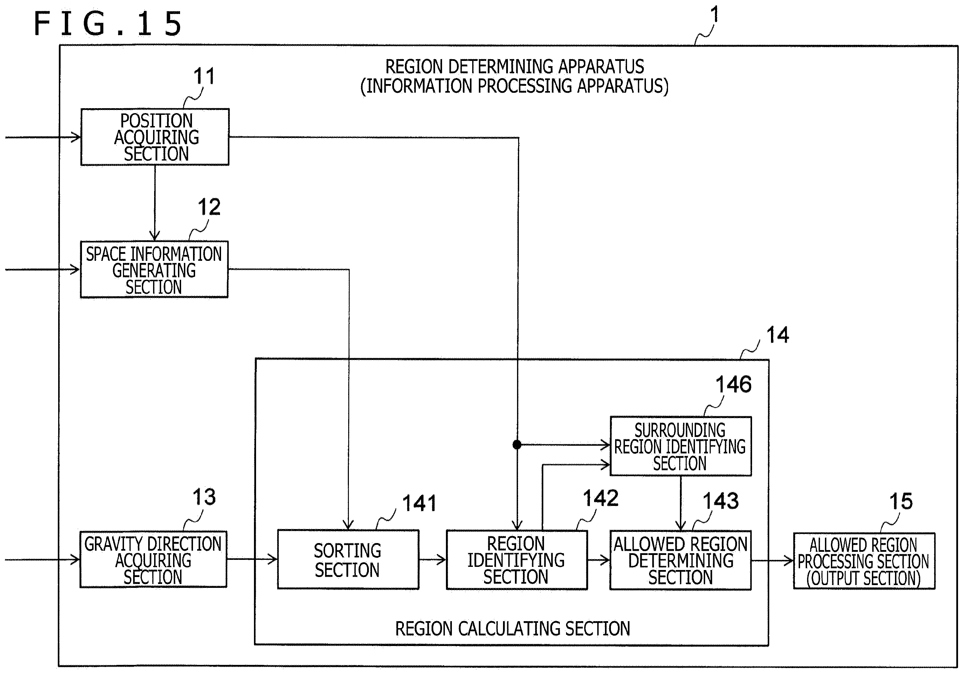

   FIG. 15 is a diagram depicting an exemplary configuration of a region determining apparatus according to a third embodiment.
[FIG. 16]

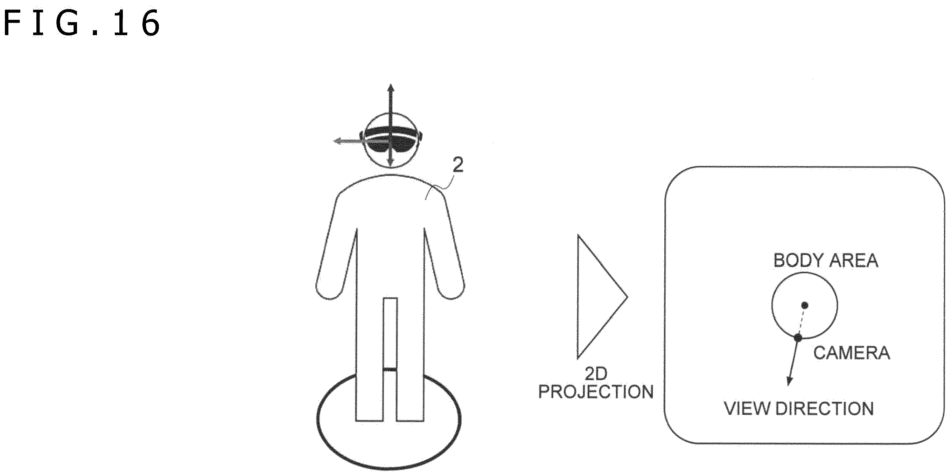

   FIG. 16 is a diagram explaining an assumed use of the third embodiment.
[FIG. 17]

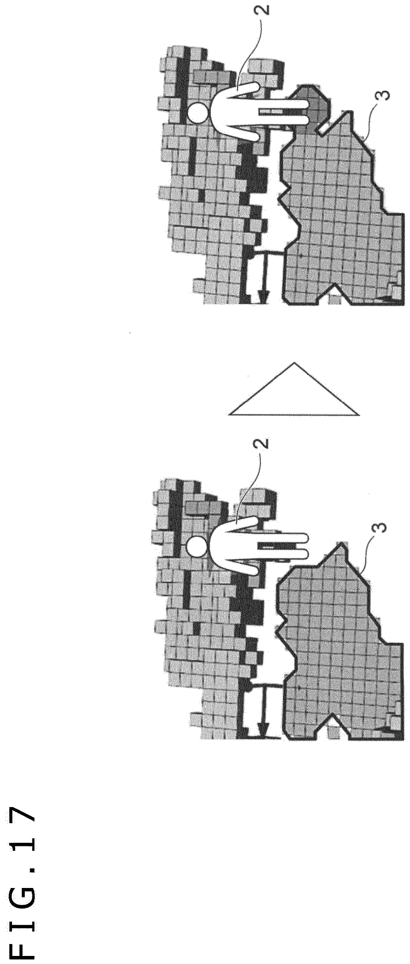

   FIG. 17 is a diagram depicting an example in which a surrounding region is included in an allowed region.
[FIG. 18]

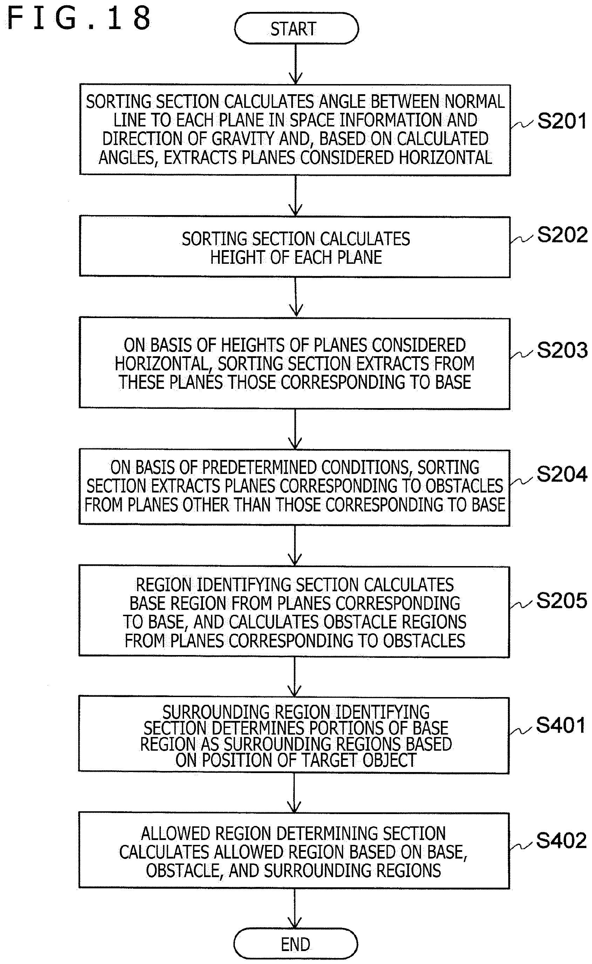

   FIG. 18 is a schematic flowchart of another region calculating process.

### [Description of Embodiments]

Some preferred embodiments of the present disclosure are described below with reference to the accompanying drawings.

### (First embodiment)

FIG. 1 is a diagram depicting an exemplary configuration of a region determining apparatus according to a first embodiment. In the example in FIG. 1, a region determining apparatus (information processing apparatus) 1 includes a position acquiring section 11, a space information generating section 12, a gravity direction acquiring section 13, a region calculating section 14, and an allowed region processing section (output section) 15. The region calculating section 14 includes a sorting section 141, a region identifying section 142, and an allowed region determining section 143.

It is to be noted that this information processing system is not limited in configuration to what is depicted in FIG. 1. A portion of the constituent elements forming the information processing apparatus depicted in FIG. 1 may be included in an apparatus other than the region determining apparatus 1 or may exist as an independent apparatus. Also, the constituent elements depicted in FIG. 1 may be aggregated in the region determining apparatus 1 or may be distributed. The region determining apparatus 1 may include a constituent element or elements not illustrated or explained. For example, at least one piece of memory or storage for storing beforehand information necessary for processing may be included in the region determining apparatus 1.

The information processing system of the present embodiment determines an allowed region for a target object. The target object is not limited to anything specific and may be a person, an animal, or a machine. Further, the allowed region refers to a region in which the target object is allowed to be positioned. For example, the allowed region may be an area in which the target object is allowed to move or a portion of the target object is allowed to move.

FIG. 2 is a diagram depicting an exemplary allowed region. In the example in FIG. 2, a user 2 wearing a head-mounted display (HMD) is indicated as the target object. A region 3 in which the user 2 can move and stretch the arms without colliding with obstacles is indicated as the allowed region. It is to be noted that, as depicted in FIG. 2, the allowed region may be expressed in the form of a three-dimensional region combining dotted lines 31 marked on the floor with walls 32 extending vertically from the dotted lines 31. Alternatively, the allowed region may be expressed as a two-dimensional region formed by the dotted lines 31 only. That is, the allowed region may be either a two-dimensional or a three-dimensional region.

Heretofore, the allowed region has been designated manually by the user because it is difficult to automatically estimate an allowed region reflecting the actual surroundings without the user's input. For example, it is common practice for the user to designate the allowed region by drawing its boundary lines by using a device such as a game controller. It is also common practice to establish as the allowed region a predetermined range, for example, with a radius of a few meters around the user. The region determining apparatus 1 of the present embodiment thus automatically estimates the allowed region reflecting the actual surrounding environment, which reduces the user's time and effort for designating boundaries.

In another example of the allowed region, a vehicle may be regarded as the target object, and a range in which the vehicle is allowed to move safely may be designated as the allowed region. In a further example, a range in which an arm of a floor-mounted robot arm is allowed to move freely may be designated as the allowed region.

The processing of each of the constituent elements making up the region determining apparatus 1 is explained below. It is to be noted that, as information input for determining the allowed region, the present embodiment utilizes the position of the target object, space information regarding the surroundings of the target object, and the direction of gravity. Hence, FIG. 1 depicts the position acquiring section 11 that acquires the position of the target object, the space information generating section 12 that generates the space information, and the gravity direction acquiring section 13 that acquires the direction of gravity. It is to be noted that, for the present embodiment, these items of information may be acquired by use of existing methods that are not limited to anything specific.

The position acquiring section 11 acquires the position of the target object in a three-dimensional space. For example, the position acquiring section 11 may acquire an image depicting the target object and its surroundings and, based on the acquired image, estimate a presumed position of the target object in a three-dimensional space surrounding the target object. In another example, the position of the target object may be acquired from a satellite positioning system that uses aeronautical satellites. In the latter case, a predetermined reference position for the satellite positioning system in a three-dimensional space needs to be acquired beforehand so as to determine a positional relation between the target object on one hand and the three-dimensional space such as a room in which the target object exists on the other hand.

The space information generating section 12 generates the space information regarding the three-dimensional space surrounding the target object. The space information in the present disclosure involves using multiple planes to represent an object existing in the three-dimensional space. For example, a 3D mesh or an occupancy grid map serves as the space information in the present disclosure. FIG. 3 is a diagram depicting exemplary space information. FIG. 3 indicates a 3D mesh 4 as the space information. The 3D mesh 4 includes triangular unit planes (meshes) 41. It is to be noted that, in the case where a plane pertaining to the target object is included in the space information, that plane is removed from the space information based on the position of the target object.

The method of generating planes for the space information is not limited to anything specific. For example, the space information generating section 12 may acquire distance measurement information such as a distance image indicative of the distance to a surrounding object, from a distance measuring device such as a three-dimensional sensor and, using a method such as Kinect Fusion, may generate the 3D mesh from the distance measurement information. The distance image can be acquired from a stereo camera, a distance image sensor operating on the ToF (Time of Flight) principle, or the like. Alternatively, planes may be generated from point group data obtained by observing surrounding objects.

It is to be noted that the space information thus generated may be used not only for estimating the allowed region but also for performing other processes. For example, the generated space information may be displayed to present the user wearing the HMD with the information regarding the surrounding environment.

The gravity direction acquiring section 13 acquires the direction of gravity. For example, the direction of gravity may be obtained using an IMU (Inertial Measurement Unit) or the like.

It is to be noted that the devices for acquiring information used to generate input information for determining the allowed region, such as a camera, a distance measuring device, and an IMU, may be included in the same housing that holds the region determining apparatus 1. For example, these devices and the region determining apparatus 1 may be incorporated in a wearable terminal such as the HMD indicated in FIG. 2. In this case, the position of the target object coincides with the position of the three-dimensional sensor taking distance images. This eliminates the time and effort to prepare a camera for taking images of the target object and of the surrounding environment in order to estimate the position of the target object. Further, even in the case where a camera is prepared, it is impossible to update the allowed region if the target object moves out of an imaging range of the camera. For these reasons, the devices for obtaining the information used to generate the input information are preferably attached to the target object so as to determine the allowed region anew following a movement of the target object.

It is to be noted that, as described above, the position acquiring section 11, the space information generating section 12, and the gravity direction acquiring section 13 may be located in an apparatus external to the region determining apparatus 1, and the region determining apparatus 1 may acquire the information from the external apparatus. In this case, when the region determining apparatus 1 obtains an occupancy grid map regarding the surroundings of the target object, the direction of gravity need not be acquired because the grid of the occupancy grid map is formed in parallel with, and perpendicular to, the direction of gravity.

The sorting section 141 sorts multiple planes included in the space information into at least a plane corresponding to a base and a plane corresponding to an obstacle.

Unlike walls and the like, the base is an object that does not constitute obstacles and does not hinder the movement of the target object. For example, the floor, a stage of a theater, and a road correspond to the base. For the present embodiment, the base is assumed to be a plane perpendicular to the direction of gravity, i.e., a horizontal plane. It is to be noted, however, that the base need not be an exact horizontal plane. If an angle between a normal line to a plane and the direction of gravity falls within a predetermined threshold value, that plane may be considered a horizontal plane. It is to be noted that the threshold value is only required to suitably be determined depending on specifications required of the region determining apparatus 1 such as accuracy.

In view of the above, the sorting section 141 calculates the angle between a normal line to each of the planes such as the unit planes 41 in FIG. 3 included in the space information on one hand, and the direction of gravity on the other hand. The planes of which the angle thus calculated is smaller than the threshold value are extracted as horizontal planes.

Some of the extracted horizontal planes correspond to the base; others correspond to obstacles. In sorting the extracted horizontal planes, the present embodiment assumes that the number of horizontal planes corresponding to the base is greater than the number of horizontal planes corresponding to obstacles and that the horizontal planes corresponding to the base are different in height from those corresponding to obstacles. Based on such an assumption, it is possible to calculate the heights of the extracted horizontal planes and consider that the largest number of the horizontal planes having the same height constitute the base. It is to be noted that, if the difference in height between planes is equal to or less than a predetermined value, these planes may be considered to have the same height. In other words, it may also be said that the extracted horizontal planes are sorted by height into multiple groups each having a predetermined range of heights and that the planes sorted to form the largest group are regarded as corresponding to the base. This is how the planes corresponding to the base are extracted.

Calculation of the height of a plane comes down to the problem of finding a parameter "d" in the case where the plane is expressed as ax + by + cz = d using a vector (a, b, c) indicating the direction of gravity. The parameter "d" can be obtained using methods such as RANSAC (Random sample consensus). Even if the direction of gravity is unknown, methods such as Efficient RANSAC can be used to estimate planes from the 3D mesh itself.

It is to be noted that the height of the base may well be designated. In such a case, of the extracted horizontal planes, those having the designated height may be regarded as corresponding to the base. For example, the height of the base may be designated by use of markers placed on the base. However, it is preferred that the region determining apparatus 1 calculate the height of the base because there is no hassle of having to place the markers.

The sorting section 141 further extracts the planes corresponding to obstacles from the space information such as the 3D mesh. The planes not corresponding to the base may simply be regarded as corresponding to obstacles. Alternatively, conditions by which to regard a plane as an obstacle may be established beforehand, and the planes not meeting the conditions may be considered not to correspond to obstacles.

For example, suppose that the target object is 1 m in size and that the height of a plane is 5 m from the base. In this case, the target object does not collide with the plane, so that the plane may be determined not to be an obstacle to the target object. This type of determination may be additionally made to prevent those regions around the target object that do not affect the movement of the latter from not being regarded as the allowed region.

In another example, in the case where the target object is a vehicle and where the volume of an object including multiple planes is equal to or less than a predetermined value, that object is regarded as not affecting the traveling of the vehicle. The planes constituting the object may then be determined not to be obstacles to the target object. In this manner, there may be established conditions by which to determine whether or not a given plane corresponds to an obstacle.

The region identifying section 142 identifies base regions pertaining to the planes corresponding to the base and obstacle regions pertaining to the planes corresponding to obstacles. For example, a three-dimensional shape including planes corresponding to obstacles may be projected to obtain a two-dimensional region.

FIG. 4 is a diagram depicting an exemplary base region. FIG. 5 is a diagram depicting an exemplary obstacle region. In the examples in FIGS. 4 and 5, the base region and the obstacle region are each indicated in a bird's-eye view. In the example in FIG. 4, a dark portion denotes the base region. In the example in FIG. 5, a dark portion represents the obstacle region.

It is to be noted that the base region and the obstacle region may partially overlap with each other. For example, where there is an object such as a table which does not cover the base, the base under the object is also indicated as the base region, and the plane pertaining to the object is indicated as an obstacle region. As a result, the two regions overlap with each other in the bird's-eye views in FIGS. 4 and 5.

The allowed region determining section 143 determines the allowed region based on the base and obstacle regions. FIG. 6 is a diagram depicting an exemplary allowed region. In the example in FIG. 6, a dark portion denotes the allowed region.

The allowed region determining section 143 may determine, as the allowed region, a region left by removing the overlapping portion between the base region and the obstacle region from the base region. In order to enhance safety, the remaining region may be reduced in size. In the case where the allowed region is formed not by a continuous region but by multiple discrete regions like enclaves, those of the multiple regions that do not include the position of the target object may be deleted. Also, the base region may partially be deleted. For example, there may be a case where the base region includes a portion smaller in size than the target object. Such a portion may then be deleted because the target object cannot pass through it. Further, of the regions separated by deletion of the portion, those not including the position of the target object may be deleted. In this manner, the allowed region determining section 143 may determine the allowed region by adjusting the region left by removing the overlapping portion between the base region and the obstacle region from the base region. Further, a deep neural network (DNN) may be generated beforehand through learning in such a manner that the network will output the allowed region upon input of the planes corresponding to the base and to obstacles. The allowed region determining section 143 may then calculate the allowed region by use of the DNN thus generated.

The allowed region determining section 143 may calculate the boundary lines of the allowed region as indicated by dotted lines 31 in FIG. 2. The boundary lines may be calculated by use of methods such as Marching Squares. It is to be noted that multiple boundaries may well be calculated. In such a case, it is sufficient if one of the boundaries is selected in consideration of their lengths and their distances to the target object. Further, the allowed region determining section 143 may calculate virtual walls such as walls 32 in FIG. 2 by extending the boundary lines in the direction of gravity.

The allowed region processing section 15 (output section) performs processing using the allowed region thus determined. For example, the allowed region processing section 15 may simply output information regarding the allowed region. The information regarding the allowed region may be information for causing the target object to recognize the allowed region. For example, the allowed region processing section 15 may generate images such as ones in FIGS. 2 and 6 indicating the allowed region and their boundary lines, and may output the generated images to a designated display unit. In the case where the target object is a person, that person may be prompted to view the allowed region so as to reduce the danger of the target object exceeding the allowed region.

It is preferred that the target object be warned of danger when the target object approaches the boundary of the allowed region. Hence, in the case where the distance between the target object and the boundary of the allowed region is equal to or less than a predetermined value, the allowed region processing section 15 may output a warning image or sound, i.e., give out an alert.

Alternatively, the allowed region processing section 15 may output instructions regarding the movement of the target object. For example, when the target object comes close to the boundary of the allowed region, the allowed region processing section 15 may give an instruction to move in a manner staying away from the boundary of the allowed region. Alternatively, the allowed region processing section 15 may change contents of the instruction depending on the position of the target object. For example, in the case where an instruction to move 1 m to the left is to be issued and where the movement of 1 m to the left is considered too close to the allowed region, adjustments may be made to issue an alternative instruction to move 0.5 m to the left. The instructions may be issued in this manner to keep the movement of the object inside the allowed region.

There may be cases where the user, having recognized the estimated allowed region, wishes to modify the allowed region. In view of this, the information processing apparatus may be caused to accept modifications to the estimated allowed region and to update the allowed region accordingly. This still reduces the user's hassle by eliminating the need for the user to manually designate the allowed region from the beginning.

Explained below is a flow of the processing involved. FIG. 7 is a schematic flowchart of overall processing performed by the region determining apparatus 1 according to the first embodiment. It is to be noted that this flow can be executed repeatedly by triggers such as the passage of time, movement of the target object, and movement of a nearby object. This flow pertains to the case where the position of the target object, the direction of gravity, and space information are in use.

A position estimating section acquires the position of the target object (S101). The gravity direction acquiring section acquires the direction of gravity (S102). The space information generating section 12 generates the space information based on the position of the target object and on distance measurement information (S103). The region calculating section 14 performs a region calculating process based on the position of the target object, on the direction of gravity, and on the space information (S104). A flow of the region calculating process will be discussed later. With the allowed region determined by the region calculating process, the allowed region processing section 15 outputs information based on the allowed region (S105). As described above, the allowed region processing section 15 may output information causing the target object to recognize the allowed region, or output information regarding instructions to prevent the target object from exceeding the allowed region without causing the target object to become aware of the allowed region.

FIG. 8 is a schematic flowchart of the region calculating process according to the first embodiment. This flow corresponds to the process of S104 in the above-described overall processing.

The sorting section 141 calculates an angle between a normal line to each of the planes in the space information on one hand and the direction of gravity on the other hand and, based on the calculated angles, extracts from the planes those considered to be horizontal (S201). The sorting section 141 further calculates the height of each of the planes (S202). It is to be noted that, whereas the height of each plane considered to be horizontal is always obtained, the heights of those not considered horizontal need only be acquired as needed.

On the basis of the heights of the planes considered to be horizontal, the sorting section 141 extracts from the horizontal planes those corresponding to the base (S203). In the case where the height of the base is designated, the planes having the designated height need only be considered to correspond to the base. In the case where the height of the base is not designated, the number of the horizontal planes having a constant height and considered to correspond to the base is assumed to be the largest among these planes. It is sufficient if the planes considered horizontal are grouped by height and the planes belonging to the largest group are determined to correspond to the base.

The sorting section 141 further extracts from the planes not corresponding to the base those corresponding to obstacles, on the basis of conditions such as height (S204). The planes not corresponding to the base may simply be regarded as corresponding to obstacles. The planes not meeting the conditions such as area and height may be regarded as not corresponding to obstacles.

The region identifying section 142 calculates the base region from the planes corresponding to the base, and calculates the obstacle region from the planes corresponding to obstacles (S205). The allowed region determining section 143 then calculates the allowed region based on the base region and on the obstacle region (S206). This completes the processing flow.

It is to be noted that the flowcharts in the present disclosure are only examples, and the processing steps involved may not necessarily be performed as described in the above flow. As long as the data necessary for the processing can be obtained, the processing steps may be switched in sequence or carried out in parallel with each other. For example, acquisition of the direction of gravity (S102) need only be performed before the region calculating process. The acquisition of the direction of gravity (S102) may thus come before acquisition of the position of the object (S101).

As described above, the first embodiment automatically determines the base and the allowed region. This eliminates the user's time and effort to designate the regions and the base.

By outputting images depicting the allowed region and by issuing an alert to indicate a close distance between the target object and the allowed region, it is possible to prevent the target object from exceeding the allowed region. It is also possible to give the target object instructions not to exceed the allowed region.

Of the obstacles, those not impeding the movement of the target object because of their differences in height may be considered not to be obstacles. This improves the accuracy of the allowed region. For example, in a system that determines the allowed region based on camera images taken from above, the regions under an overpass or under lighting equipment are designated as not allowed. This situation can be avoided by the first embodiment.

### (Second embodiment)

FIG. 9 is a diagram depicting an exemplary configuration of the region determining apparatus 1 according to a second embodiment. In the example in FIG. 9, the region calculating section 14 further includes an unknown region determining section 144 and a hollow region identifying section 145.

It is to be noted that, for the purpose of explanation, the example in FIG. 9 includes both the unknown region determining section 144 and the hollow region identifying section 145. Alternatively, only one of the two sections may be included.

In the first embodiment, objects existing in a space are expressed as planes included in the space information. These planes are sorted into the base and the obstacles in calculating the allowed region. However, there is a possibility that some objects existing in the space may not be indicated as planes included in the spaced information due to camera noise, for example. In view of this, the second embodiment assumes cases in which to use an occupancy grid map for additional utilization of information included in the occupancy grid map.

FIG. 10 is a diagram depicting an exemplary occupancy grid map. The occupancy grid map includes cube unit cells called voxels. Each voxel has a value pertaining to the probability of whether or not there is an object in a voxel region. For example, there may be a case in which objects cannot be detected accurately due to noise caused by vibration of a camera. Hence, there is practice of numerically presenting the possibility of whether an object exists. In the occupancy grid map, voxels are sorted, based on such values and on a predetermined threshold value, into Occupied voxels (occupied by objects), Free voxels (unoccupied by objects), and Unknown voxels (not known whether there are objects). For example, the voxels with the probability of object presence higher than a first threshold value are sorted as Occupied voxels; the voxels with the probability of object presence lower than a second threshold value are sorted as Free voxels; and the voxels with the probability of object presence equal to or lower than the first threshold value but equal to or higher than the second threshold value are sorted as Unknown voxels. Thus, each voxel in the occupancy grid map may be said to have one of three kinds of information: Occupied, Free, and Unknown. It is to be noted that, in the example in FIG. 10, the voxels having the Free voxel information are omitted.

As described above, the space information involves using multiple planes to represent objects existing in a three-dimensional space. As a result, in the case where the space information is generated by use of the occupancy grid map, the Occupied voxels are used to generate the space information. That is, the first embodiment uses the Occupied voxels and does not use the Free and Unknown voxels. The second embodiment, on the other hand, uses the Free voxels and Unknown voxels as well in calculating the allowed region.

It is to be noted that, although the current explanation assumes using both the space information and the occupancy grid map, the space information may be generated by use of the 3D mesh, and the occupancy grid map may be utilized in determining unknown and hollow regions, to be discussed later. The 3D mesh may be used only for detecting the base.

For example, a two-dimensional region corresponding to a location where there are numerous Unknown voxels may presumably be considered an unknown region, which is excluded from the allowed region. FIG. 11 is a diagram explaining how to calculate unknown regions. An upper part of FIG. 11 indicates a plane in parallel with widths and heights of voxels. A lower part of FIG. 11 depicts unknown regions which are generated from the upper plane and which are in parallel with lengths and widths of voxels. Most of the voxels in the first, second, and tenth columns from left on the upper plane have Unknown voxel information. For this reason, in the two-dimensional region on the underside, portions corresponding to the first, second, and tenth columns from left are considered to be an unknown region. By removing the unknown region from the allowed region, it is possible to prevent the obstacles not detected due to noise or the like from being included in the allowed region, for example.

As described above, the unknown region determining section 144 may determine the unknown region based on the information that each voxel possesses. It is to be noted that conditions for the determination may be defined as desired. For example, as indicated in the upper part of FIG. 11, the location where at least a predetermined number of Unknown voxels are stacked in a vertical direction may be included in the unknown region. The location where at least a predetermined number of Unknown voxels are stacked in the vertical direction but where at least a predetermined number of Free voxels are also stacked may optionally be regarded as not constituting an unknown region.

There may be cases where the base involves steps, such as where there is an underfloor space or stairs. That is, there may be planes under the base on which the target object is positioned. In the case where the planes other than the base are considered to be obstacles as explained in connection with the first embodiment, the planes under the base are also considered obstacles and presumably regarded as not constituting the allowed region. Still, in the case where large steps shield the planes under the base from the camera, the region pertaining to the steps may not be determined to be an obstacle region. For these reasons, the region where Free voxels are found under the base may be determined to be a hollow region, which is excluded from the allowed region.

FIG. 12 is a diagram explaining how to calculate hollow regions. An upper part of FIG. 12 depicts a plane in parallel with the widths and heights of voxels. A lower part of FIG. 12 indicates hollow regions which are generated from the upper plane and which are in parallel with the lengths and widths of voxels. The Occupied voxels in the third row of the upper plane constitute the base. The Occupied voxels coinciding in height with the base may be regarded as the base. The height of the base may be either designated or estimated by the sorting section as discussed above. In the first through the third columns from left on the upper plane, there are Free voxels under the base. As a result, the portions corresponding to the first through the third columns from left in the two-dimensional region below are regarded as a hollow region. By excluding the hollow region from the allowed region, it is possible to reduce the risk of the target object falling into a hole, for example.

As described above, the hollow region identifying section 145 may identify hollow regions based on the information possessed by the voxels located under the base. It is to be noted that conditions for the identification may be adjusted as needed.

It is to be noted that the allowed region determining section 143 may first calculate the allowed region on the basis of the base and obstacle regions, before expanding or reducing the calculated allowed region based on unknown and hollow regions. Alternatively, the allowed region determining section 143 may first calculate all regions affecting the generation of the allowed region, such as the base, obstacle, unknown, and hollow regions, before calculating the allowed region by performing logical operations such as union, set difference, and intersection on all the calculated regions.

FIG. 13 is a schematic flowchart of the region calculating process according to the second embodiment. The processing in S201 to S205 is the same as in the flowchart of the first embodiment. On the other hand, the processing in the flowchart is supplemented with an unknown region calculating process (S301) performed by the unknown region determining section 144 and a hollow region calculating process (S302) carried out by the hollow region identifying section 145. It is to be noted that the unknown region calculating process (S301) can be executed in parallel with the processing in S201 to S205. In the case where the base is designated beforehand, the hollow region calculating process (S302) can be performed in parallel with the processing in S201 to S205. In the case where the base is not designated, the hollow region calculating process (S302) is carried out after the base is identified by the sorting section, as in the example in FIG. 13. The allowed region determining section 143 then calculates the allowed region based on the regions calculated in the preceding processes (S303).

It is to be noted that the allowed region determining section 143 may reduce the allowed region based at least either on the unknown regions or on the hollow regions. For example, with the unknown and hollow regions considered to be dangerous, the allowed region may be reduced up to points at a predetermined distance from the unknown and hollow regions.

FIG. 14 includes views explaining how to reduce the allowed region based on the hollow regions. View (A) in FIG. 14 depicts a room built like a loft; the floor on the front side is not continued up to the back. Thus, in the case where the floor on the front side is regarded as the base, there is no base in a portion enclosed by an enclosing line 51, the portion being hollow. If the target object moves in such a location, there is fear that the target object may fall. In this case, the allowed region may preferably be reduced.

View (B) in FIG. 14 depicts a white enclosing line indicating a boundary of the allowed region yet to be reduced. Although smaller than a black-painted base region, the allowed region is established close to a hollow region 52 corresponding to the enclosing line 51. As a result, there is the danger of the target object falling in the case where the target object inadvertently exceeds the allowed region.

In view of the above, the allowed region is reduced on the basis of the distance from the boundary between regions such as the hollow regions where there are no objects on one hand, and regions such as the base region where objects are supposed to exist on the other hand. View (C) in FIG. 14 depicts a white enclosing line indicative of the allowed region that is reduced on the basis of the distance from the boundary. A comparison with the allowed region in View (B) in FIG. 14 reveals that the boundary of the allowed region in View (C) is not as close to the boundary between the dark location and the white location. This means that the risk of the fall is smaller in the case of View (C) than in the case of View (B) in FIG. 14.

The distance to be reduced may be determined as needed depending on the purpose of the region determining apparatus 1, for example. The method of reducing the distance may also be selected as needed. For example, one method of reducing the allowed region may involve dividing a two-dimensional region into unit cells, calculating the shortest distance between the center of each unit cell and the boundary, and excluding the unit cells of which the shortest distance is equal to or smaller than a threshold value.

As described above, the second embodiment uses the information in the occupancy grip map to identify the regions such as unknown and hollow regions that are not to be included in the allowed region, thereby determining the allowed region free of the identified unknown and hollow regions. This provides an advantageous effect of ensuring higher safety than the first embodiment.

### (Third embodiment)

FIG. 15 is a diagram depicting an exemplary configuration of the region determining apparatus 1 according to a third embodiment. In the example in FIG. 15, the region calculating section 14 further includes a surrounding region determining section 146. It is to be noted that, although the example in FIG. 15 is formed by the first embodiment being supplemented with the surrounding region determining section 146, the example may alternatively be formed by the second embodiment supplemented with the surrounding region determining section 146. That is, the surrounding region determining section 146 may be included in the region determining apparatus 1 along with at least either the unknown region determining section 144 or the hollow region identifying section 145.

In the third embodiment, a surrounding region of the target object is included in the allowed region. FIG. 16 is a diagram explaining an assumed use of the third embodiment. As indicated in a left part of FIG. 16, a camera-equipped HMD is attached to the target object. In this case, the camera does not take images of the target object. This means that a region very close to the target object may not be recognized as the allowed region. In the case where no camera is attached to the target object, the target object itself may be regarded as an obstacle, and the surroundings of the target object may not be recognized as the allowed region. Hence, the surrounding region determining section 146 may calculate a region within a predetermined distance from the target object as a surrounding region, and the allowed region determining section 143 may calculate the allowed region based on the surrounding region thus calculated.

The surrounding region determining section 146 extracts a portion of the base region calculated by the sorting section 141, on the basis of the position of the target object, and determines the extracted portion as the surrounding region. It is to be noted that the position of the target object need only be acquired in a manner similar to the first embodiment. That is, the position acquiring section 11 may either acquire the position of the target object directly from an outside, or obtain information regarding the position of the target object from the outside so as to calculate the position of the target object from the obtained information. For example, in the case where a camera is attached to the target object, the position acquiring section may first acquire the position of the camera and then calculate the position of the target object by use of the camera position and a predetermined calculating method. For example, in the case where the camera is attached in a manner taking images of a direction of travel of the target object, the target object is presumably positioned at a predetermined distance from the camera in an opposite direction of a view direction of the camera, as indicated in a right part of FIG. 16. This kind of calculating method may be determined beforehand.

The size of the surrounding region may be determined as needed. For example, the region identifying section 142 may identify, as the surrounding region, a circle with a predetermined radius centering on the position of the target object, or a shape reflecting the size of the target object. That is, the shape of the surrounding region of the target object may be defined as needed depending on the purpose of the region determining apparatus 1.

For example, in the case where the target object is a person, the surrounding region may be set to be elliptical in shape depending on the camera angle. The reason for this is that the human body is generally broader in a crosswise direction than in a front-back direction and that the more the person stoops down, the more the body extends in the front-back direction. For example, in the case where the surrounding region is defined as an ellipse in shape, the length of the minor axis and that of the major axis are prepared as parameters. An angle between a vector in the front direction of the camera and a vector in the direction of gravity is calculated next. The surrounding region may then be calculated by use of the length of each of the axis directions obtained by linearly varying the length of the minor axis with respect to the calculated angle.

In another example, in the case where the target object is a living being, the size of the surrounding region may be determined from records of a standard body shape of that living being. For example, in the case where the region determining apparatus 1 acquires data regarding a given target object, the surrounding region determining section 146 predicts bodily characteristics of the target object from the acquired data. For example, upon receipt of data such as the age, gender, and nationality of the target object, the surrounding region determining section 146 may acquire from a suitable database or the like data regarding the standard body type of the target object conforming to the received data and, based on the acquired standard body type, may determine the size of the surrounding region.

In a further example, the size of the surrounding region may be determined from a posture of the target object. For example, it is known that the posture of a person imaged by the camera can be estimated by use of existing pose estimation techniques. The estimated pose can then be projected onto a two-dimensional plane for calculation of a fitting circle or an ellipse, which in turn allows the surrounding region to be calculated.

It is to be noted that, alternatively, images from a camera different from that for imaging obstacles, measurements from sensors, or the like may be used as a basis for calculating the surrounding region. For example, there may be cases where sensors are attached to the target object in order to detect and track the movement of the target object. In such a case, the measurements from the attached sensors may be used to determine the size of the surrounding region.

There may also be a case where the surrounding region is calculated in real time or at predetermined intervals. In such a case where the surrounding region is calculated multiple times, the surrounding region determining section may perform calculation in such a manner that the previously-calculated surrounding region is included in the surrounding region to be calculated this time. That is, a new surrounding region may be generated on the basis of the preceding surrounding region, and a locus of the movement of the target object may be included in the generated surrounding region.

FIG. 17 is a diagram depicting an example in which the surrounding region is included in the allowed region. In a left part of FIG. 17, the floor on which the user 2 as the target object is positioned is not included in the allowed region 3. In a right part of FIG. 17, on the other hand, the floor on which the user 2 is positioned is included in the allowed region 3. This, in the case of secondary processing using the calculated allowed region, makes it possible to prevent problems stemming from the absence of the target object in the allowed region.

FIG. 18 is a schematic flowchart of the region calculating process according to the third embodiment. The processing in S201 to S205 is the same as in the flowchart of the first embodiment. Following the processing of S205, a surrounding region calculating process is performed by the surrounding region identifying section (S401). In addition to the base and obstacle regions, the allowed region determining section 143 calculates the allowed region based at least on the surrounding region (S402). It is to be noted that, obviously, the allowed region may be calculated also on the basis of the unknown and hollow regions.

It is to be noted that there may be cases where obstacles exist around the target object or where the presence of obstacles is falsely detected around the target object. For these reasons, the region determining apparatus 1 may request to be instructed as to whether or not to include the surroundings of the target object into the allowed region and, given instructions in response to the request, determine whether or not to include the surroundings of the target object into the allowed region.

As described above, the third embodiment calculates the surrounding region of the target object and causes the calculated surrounding region to be included in the allowed region. This improves the accuracy of the secondary processing based on the allowed region.

The processes of the devices and apparatuses constituting the embodiments of the present disclosure may be implemented by software (programs) executed by a CPU (Central Processing Unit) or by a GPU (Graphics Processing Unit), for example. It is to be noted that, alternatively, the processes of the devices and apparatuses involved may be performed not entirely by software but partially by hardware such as by dedicated circuits.

It is to be noted that the embodiments described above are merely examples for embodying the present disclosure, which may also be implemented in various other embodiments. For example, these embodiments may be modified, replaced, or simplified or may diversely be combined, without departing from the spirit and scope of the present disclosure. The embodiments altered in such manners are also included in the scope of the present disclosure as well as in the scope of the appended claims or the equivalents thereof.

It is to be noted that the present disclosure can also adopt the following configurations.
(1) An information processing apparatus including:
   a sorting section configured to sort multiple planes included in space information representing an object existing in a three-dimensional space by use of the multiple planes, into at least a plane corresponding to a base and a plane corresponding to an obstacle;
   a region identifying section configured to identify a base region pertaining to the plane corresponding to the base and an obstacle region pertaining to the plane corresponding to the obstacle; and
   an allowed region determining section configured to calculate, on the basis of the base region and the obstacle region, an allowed region in which a target object existing in the three-dimensional space is allowed to be positioned.
(2) The information processing apparatus according to (1),
   in which the sorting section
   calculates an angle between a normal line to each of the multiple planes and a direction of gravity,
   selects from the multiple planes planes considered to be horizontal planes, on the basis of the angles, and
   selects the base from the planes considered to be horizontal.
(3) The information processing apparatus according to (2),
   in which the sorting section
   calculates heights of the planes considered to be horizontal in the three-dimensional space,
   on the basis of the calculated heights, sorts the planes considered to be horizontal into multiple groups, and
   selects as the base the planes belonging to a group having a largest number of the planes in the multiple groups.
(4) The information processing apparatus according to (3),
   in which the sorting section
   calculates heights of the multiple planes in the three-dimensional space, and
   on the basis of the calculated heights, sorts the multiple planes other than those corresponding to the base into a plane corresponding to the obstacle and a plane not corresponding to the obstacle.
(5) The information processing apparatus according to any of (1) to (4), further including:
   an output section configured to output an image indicating the allowed region.
(6) The information processing apparatus according to any of (1) to (4), further including:
   an output section configured to output either an image or sound giving a warning in a case in which a distance between the target object and a boundary of the allowed region is equal to or less than a predetermined value.
(7) The information processing apparatus according to any of (1) to (4), further including:
   an output section configured to output an instruction as to a movement of the target object and adjust the instruction to keep the movement of the target object within the allowed region.
(8) The information processing apparatus according to any of (1) to (7), further including:
   a space information generating section configured to generate the space information.
(9) The information processing apparatus according to (8),
   in which the space information generating section generates the space information from distance measurement information indicative of a distance from a surrounding object acquired by a distance measuring device attached to the target object.
(10) The information processing apparatus according to (9),
   in which the space information generating section generates the space information from the distance measurement information measured by the distance measuring device, and,
   on the basis of a position of the target object, the space information generating section removes information corresponding to the target object from either the distance measurement information or the space information.
(11) The information processing apparatus according to (3), further including:
   a distance measuring section configured to generate distance measurement information by measuring a distance to a subject;
   a space information generating section configured to generate the space information from the distance measurement information;
   a gravity direction acquiring section configured to acquire the direction of gravity; and
   an output section configured to output information regarding the allowed region.
(12) The information processing apparatus according to any of (1) to (11), further including:
   an unknown region determining section configured to determine an unknown region based on an occupancy grid map,
   in which the occupancy grid map represents the three-dimensional space by using multiple three-dimensional unit cells,
   at least one of the multiple unit cells possesses unknown information indicating that it is unknown whether or not the unit cell is occupied by an object,
   the unknown region determining section determines the unknown region based on a position of the three-dimensional unit cell possessing the unknown information, and
   the allowed region determining section prevents the unknown region from being included in the allowed region.
(13) The information processing apparatus according to (12),
   in which the unknown region determining section includes into the unknown region a location in which at least a predetermined number of the three-dimensional unit cells possessing the unknown information are stacked in a vertical direction.
(14) The information processing apparatus according to (12),
   in which the unknown region determining section does not include into the unknown region a location in which at least a predetermined number of the three-dimensional unit cells possessing the unknown information are stacked in a vertical direction but in which at least a predetermined number of the three-dimensional unit cells possessing non-occupancy information indicating that the unit cell is not occupied by any object are also stacked.
(15) The information processing apparatus according to any of (1) to (14), further including:
   a hollow region identifying section configured to identify a hollow region based on an occupancy grid map,
   in which the occupancy grid map represents the three-dimensional space by using multiple three-dimensional unit cells,
   at least one of the multiple unit cells possesses non-occupancy information indicating that the unit cell is not occupied by any object,
   the hollow region identifying section determines a hollow region based on a position of the three-dimensional unit cell possessing the non-occupancy information, and
   the allowed region determining section does not include the hollow region into the allowed region.
(16) The information processing apparatus according to (15),
   in which the hollow region identifying section includes into the hollow region a location of a three-dimensional unit cell that possesses the non-occupancy information and is positioned lower than the plane corresponding to the base.
(17) The information processing apparatus according to any of (1) to (16), further including:
   a surrounding region determining section configured to calculate as a surrounding region a region that constitutes a portion of the base region and includes a position of the target object, on the basis of at least the position of the target object,
   in which the allowed region determining section calculates the allowed region further on the basis of the surrounding region.
(18) The information processing apparatus according to (17),
   in which the surrounding region determining section adjusts either a shape or a size of the surrounding region on the basis of a direction of imaging by a camera and a direction of gravity.
(19) The information processing apparatus according to (17) or (18),
   in which the surrounding region determining section recognizes a general size of the target object on the basis of attribute information regarding the target object and adjusts either a shape or a size of the surrounding region according to the general size of the target object.
(20) The information processing apparatus according to any of (17) to (19),
   in which the surrounding region determining section adjusts either a shape or a size of the surrounding region according to a posture of the target object.
(21) An information processing method including:
   a step of sorting multiple planes included in space information representing an object existing in a three-dimensional space by use of the multiple planes, into at least a plane corresponding to a base and a plane corresponding to an obstacle;
   a step of calculating a base region pertaining to the plane corresponding to the base and an obstacle region pertaining to the plane corresponding to the obstacle; and
   a step of calculating, on the basis of the base region and the obstacle region, an allowed region in which a target object existing in the three-dimensional space is allowed to be positioned.
(22) A program for execution by a computer, the program including:
   a step of sorting multiple planes included in space information representing an object existing in a three-dimensional space by use of the multiple planes, into at least a plane corresponding to a base and a plane corresponding to an obstacle;
   a step of calculating a base region pertaining to the plane corresponding to the base and an obstacle region pertaining to the plane corresponding to the obstacle; and
   a step of calculating, on the basis of the base region and the obstacle region, an allowed region in which a target object existing in the three-dimensional space is allowed to be positioned.

### [Reference Signs List]

1: Region determining apparatus (information processing apparatus)
11: Position acquiring section
12: Space information generating section
13: Gravity direction acquiring section
14: Region calculating section
141: Sorting section
142: Region identifying section
143: Allowed region determining section
15: Allowed region processing section (output section)
2: User
3: Example of allowed region
31: Dotted line
32: Virtual wall
4: 3D mesh
41: Unit plane (mesh)
51: Enclosing line
52: Hollow region

## Claims

1. An information processing apparatus comprising:
a sorting section configured to sort multiple planes included in space information representing an object existing in a three-dimensional space by use of the multiple planes, into at least a plane corresponding to a base and a plane corresponding to an obstacle;
a region identifying section configured to identify a base region pertaining to the plane corresponding to the base and an obstacle region pertaining to the plane corresponding to the obstacle; and
an allowed region determining section configured to calculate, on a basis of the base region and the obstacle region, an allowed region in which a target object existing in the three-dimensional space is allowed to be positioned.

2. The information processing apparatus according to claim 1,
wherein the sorting section
calculates an angle between a normal line to each of the multiple planes and a direction of gravity,
selects from the multiple planes planes considered to be horizontal planes, on a basis of the angles, and
selects the base from the planes considered to be horizontal.

3. The information processing apparatus according to claim 2,
wherein the sorting section
calculates heights of the planes considered to be horizontal in the three-dimensional space,
on a basis of the calculated heights, sorts the planes considered to be horizontal into multiple groups, and
selects as the base the planes belonging to a group having a largest number of the planes in the multiple groups.

4. The information processing apparatus according to claim 3,
wherein the sorting section
calculates heights of the multiple planes in the three-dimensional space, and
on a basis of the calculated heights, sorts the multiple planes other than those corresponding to the base into a plane corresponding to the obstacle and a plane not corresponding to the obstacle.

5. The information processing apparatus according to claim 1, further comprising:
an output section configured to output an image indicating the allowed region.

6. The information processing apparatus according to claim 1, further comprising:
an output section configured to output either an image or sound giving a warning in a case in which a distance between the target object and a boundary of the allowed region is equal to or less than a predetermined value.

7. The information processing apparatus according to claim 1, further comprising:
an output section configured to output an instruction as to a movement of the target object and adjust the instruction to keep the movement of the target object within the allowed region.

8. The information processing apparatus according to claim 1, further comprising:
a space information generating section configured to generate the space information.

9. The information processing apparatus according to claim 8,
wherein the space information generating section generates the space information from distance measurement information indicative of a distance from a surrounding object acquired by a distance measuring device attached to the target object.

10. The information processing apparatus according to claim 9,
wherein the space information generating section generates the space information from the distance measurement information measured by the distance measuring device, and,
on a basis of a position of the target object, the space information generating section removes information corresponding to the target object from either the distance measurement information or the space information.

11. The information processing apparatus according to claim 3, further comprising:
a distance measuring section configured to generate distance measurement information by measuring a distance to a subject;
a space information generating section configured to generate the space information from the distance measurement information;
a gravity direction acquiring section configured to acquire the direction of gravity; and
an output section configured to output information regarding the allowed region.

12. The information processing apparatus according to claim 1, further comprising:
an unknown region determining section configured to determine an unknown region based on an occupancy grid map,
wherein the occupancy grid map represents the three-dimensional space by using multiple three-dimensional unit cells,
at least one of the multiple unit cells possesses unknown information indicating that it is unknown whether or not the unit cell is occupied by an object,
the unknown region determining section determines the unknown region based on a position of the three-dimensional unit cell possessing the unknown information, and
the allowed region determining section prevents the unknown region from being included in the allowed region.

13. The information processing apparatus according to claim 12,
wherein the unknown region determining section includes into the unknown region a location in which at least a predetermined number of the three-dimensional unit cells possessing the unknown information are stacked in a vertical direction.

14. The information processing apparatus according to claim 12,
wherein the unknown region determining section does not include into the unknown region a location in which at least a predetermined number of the three-dimensional unit cells possessing the unknown information are stacked in a vertical direction but in which at least a predetermined number of the three-dimensional unit cells possessing non-occupancy information indicating that the unit cell is not occupied by any object are also stacked.

15. The information processing apparatus according to claim 1, further comprising:
a hollow region identifying section configured to identify a hollow region based on an occupancy grid map,
wherein the occupancy grid map represents the three-dimensional space by using multiple three-dimensional unit cells,
at least one of the multiple unit cells possesses non-occupancy information indicating that the unit cell is not occupied by any object,
the hollow region identifying section determines a hollow region based on a position of the three-dimensional unit cell possessing the non-occupancy information, and
the allowed region determining section does not include the hollow region into the allowed region.

16. The information processing apparatus according to claim 15,
wherein the hollow region identifying section includes into the hollow region a location of a three-dimensional unit cell that possesses the non-occupancy information and is positioned lower than the plane corresponding to the base.

17. The information processing apparatus according to claim 1, further comprising:
a surrounding region determining section configured to calculate as a surrounding region a region that constitutes a portion of the base region and includes a position of the target object, on a basis of at least the position of the target object,
wherein the allowed region determining section calculates the allowed region further on a basis of the surrounding region.

18. The information processing apparatus according to claim 17,
wherein the surrounding region determining section adjusts either a shape or a size of the surrounding region on a basis of a direction of imaging by a camera and a direction of gravity.

19. The information processing apparatus according to claim 17,
wherein the surrounding region determining section recognizes a general size of the target object on a basis of attribute information regarding the target object and adjusts either a shape or a size of the surrounding region according to the general size of the target object.

20. The information processing apparatus according to claim 17,
wherein the surrounding region determining section adjusts either a shape or a size of the surrounding region according to a posture of the target object.

21. An information processing method comprising:
a step of sorting multiple planes included in space information representing an object existing in a three-dimensional space by use of the multiple planes, into at least a plane corresponding to a base and a plane corresponding to an obstacle;
a step of calculating a base region pertaining to the plane corresponding to the base and an obstacle region pertaining to the plane corresponding to the obstacle; and
a step of calculating, on a basis of the base region and the obstacle region, an allowed region in which a target object existing in the three-dimensional space is allowed to be positioned.

22. A program for execution by a computer, the program comprising:
a step of sorting multiple planes included in space information representing an object existing in a three-dimensional space by use of the multiple planes, into at least a plane corresponding to a base and a plane corresponding to an obstacle;
a step of calculating a base region pertaining to the plane corresponding to the base and an obstacle region pertaining to the plane corresponding to the obstacle; and
a step of calculating, on a basis of the base region and the obstacle region, an allowed region in which a target object existing in the three-dimensional space is allowed to be positioned.
